# EUROPÄISCHE PATENTSCHRIFT

(11) **EP 1 033 568 B1**
(45) Veröffentlichungstag und Bekanntmachung des Hinweises auf die Patenterteilung: **26.11.2008**
(21) Anmeldenummer: 00103366.1
(22) Anmeldetag: 22.02.2000
(51) Int. Cl.: G01N 21/65, G01J 3/453

(54) **Verfahren und Verwendung einer Vorrichtung zur Wirkstoffsuche**
Method and use of a device for active substance search
Methode et utilisation d'un dispositif aux fins de recherche de principes actifs

(30) Priorität: 03.03.1999 DE 19909351
(43) Veröffentlichungstag der Anmeldung: 06.09.2000
(73) Patentinhaber: BASF SE, 67056 Ludwigshafen (DE)
(72) Erfinder: Schroff, Wolfgang, Dr., 67271 Neuleiningen (DE); Klingler, Jürgen, Dr., 67112 Mutterstadt (DE); Horn, Dieter, Dr., 69120 Heidelberg (DE)
(74) Vertreter: Isenbruck, Günter

(56) Entgegenhaltungen:
- EP-A- 0 697 590
- WO-A-97/05280
- DE-A- 19 533 092
- DE-A- 19 630 956
- SCHROF W ET AL: "Raman correlation spectroscopy: a method for studying chemical composition and dynamics of disperse systems" PHYSICAL REVIEW E (STATISTICAL PHYSICS, PLASMAS, FLUIDS, AND RELATED INTERDISCIPLINARY TOPICS), MARCH 1998, APS THROUGH AIP, USA, Bd. 57, Nr. 3, Seiten R2523-R2526, XP002174124 ISSN: 1063-651X

## Beschreibung

Die vorliegende Erfindung betrifft ein Verfahren und eine Vorrichtung, die zur Suche eines effektiven Wirkstoffs, insbesondere von Pharma- bzw. Pflanzenschutzwirkstoffen genutzt werden. Die Ermittlung eines effektiven Wirkstoffs erfolgt dabei indirekt, wobei davon ausgegangen wird, dass ein Referenzwirkstoff aus einem vorgelegten Komplex aus Substrat und Referenzwirkstoff durch einen effektiveren Wirkstoff aus der Substanzbank, der eine größere Bindungskonstante zum Substrat aufweist, verdrängt wird; man spricht deshalb auch von Verdrängungsverfahren.

Die moderne Wirkstoffsuchforschung bedient sich immer mehr so genannter Brute-Force- oder High-Throughput-Verfahren, bei denen aus einer großen Anzahl von Substanzen Wirkstoffe für ein vorgegebenes Substrat herausgefiltert werden. Dazu werden Verfahren und Vorrichtungen benötigt, die es erlauben, mit großer Geschwindigkeit, hoher Empfindlichkeit und Selektivität die Bindung von Substanzen an Substrate zu bestimmen. Beispiele sind hierfür homogene Fluoreszenz-Assays nach dem Verdrängungsprinzip mit Detektion der Veränderung der Rotationsdiffusion über eine veränderte Fluoreszenzpolarisation, der Veränderung der Translationsdiffusion über Fluoreszenzkorrelation oder Lichtstreuung aufgrund einer Veränderung der lokalen Umgebung nach erfolgter Verdrängung eines Referenzwirkstoffs.

Eine andere Möglichkeit ist es, von heterogenen Assays auszugehen, die über Ankopplung an Festphasen oder dispergierte Teilchen arbeiten und aufwendige Wasch- bzw. Trennungsschritte erfordern, die bei homogenen Nachweisverfahren entfallen. Die Bestimmung der Wirkstoffkonzentrationen muss durch zusätzliche Eichungen vorgenommen werden, was bei Korrelationsverfahren, wie z. B. der Fluoreszenzkorrelationsspektroskopie oder der Ramankorrelationsspektroskopie entfällt, da diese auf Anzahlfluktuationen beruhen und somit eine konkrete Aussage über die Wirkstoffkonzentration nicht nötig ist, wie in der DE 195 33 092.7 beschrieben ist.

In DE 195 33 092 A1 wird auch ein Verfahren zur Suche eines effektiven Wirkstoffs durch Verdrängen eines Referenzwirkstoffs aus einem vorgelegten Komplex aus Rezeptor und Referenzwirkstoff durch einen effektiveren Wirkstoff offenbart. Die Detektion des Verdrängungsprozesses erfolgt durch Beobachtung des verdrängten Referenzwirkstoffes mittels der parallelisierten Zweiphotonen-Fluoreszenz-Korrelations-Spektroskopie (TPA-FCS).

DE 196 30 956 A1 offenbart ein Verfahren und eine Vorrichtung zur RamanKorrelationsspektroskopie zur Bestimmung von Diffusionsparametern, Konzentration, Größe oder Strömungsverhalten von Partikeln in einer Probe, wobei Anregungslicht einer Lichtquelle in die Probe geleitet, Raman-Streulicht aus einem Beobachtungsvolumen der Probe aufgefangen und einem Spektrographen zugeführt wird.

WO 97/05280 A offenbart ein Verfahren zur Detektion von Nukleinsäuren und Nukleinsäuregruppen in einer Probe durch Aufnahme des SER(R)S Spektrums eines SER(R)S-aktiven Komplexes, der das zu untersuchende Molekül enthält.

Andere homogene Meßverfahren wie Verdrängungsassays mit Detektion von Fluoreszenzpolarisation bzw. Fluoreszenzlebensdauer können empfindlich auf lokale Beweglichkeiten des Fluorophoren bzw. auf kleine Veränderungen der lokalen Umgebung reagieren, was oft sehr störend für die eigentlich interessierende Messung sein kann.

Eine Aufgabe der vorliegenden Erfindung ist es daher, ein Verfahren und eine Vorrichtung bereitzustellen, mit deren Hilfe eine schnelle, sehr sensible und sehr selektive Bestimmung der Bindung von Substanzen an Substrate vorgenommen werden kann, zur Verwendung im Bereich der Wirkstoffsuche.

Diese Aufgabe wird durch das erfindungsgemäße Verfahren nach Anspruch 1 und der Verwendung einer entsprechenden Vorrichtung nach Anspruch 3 gelöst.

Weitere Ausgestaltungsmerkmale sind in den entsprechenden Unteransprüchen angegeben.

Das erfindungsgemäße Verfahren stellt ein Verfahren dar zur Suche eines effektiven Wirkstoffs durch Verdrängen eines Referenzwirkstoffs aus einem vorgelegten Komplex aus Substrat und Referenzwirkstoff durch einen effektiveren Wirkstoff aus der Substanzbank, der eine größere Bindungskonstante zum Substrat aufweist, wobei die Registrierung des Translationsdiffusionsverhaltens des mindestens einen Referenzwirkstoffs mittels der Ramankorrelationsspektroskopie erfolgt, wobei der mindestens eine Referenzwirkstoff mit einem einen hohen Ramanquerschnitt und ein charakteristisches Ramanspektrum aufweisenden aromatischen Molekül modifiziert wird, und dieser modifizierte Referenzwirkstoff mit einem metallischen Nanoteilchen gekoppelt wird, wobei dieser nicht seine Bioaktivität verliert. *[*Raman-Korrelations-Spektroskopie, W. Schrof, J. Klingler, S. Rozouvan, D. Horn; Phys. Rev. E 57 (1998) R2523-6*]*.

Bei der Ramankorrelationsspektroskopie wird die Dynamik von selektierten Partikeln bestimmt. Dazu wird das Fluktuationsverhalten des Ramansignals von für die Partikel charakteristischen Banden aus einem kleinen abgeschlossenen Messvolumen analysiert. Mit Hilfe der daraus abgeleiteten Autokorrelationsfunktion können die mittlere Zahl und die Diffusionskonstante gemessen werden. Die Abklingkonstante der Korrelationsfunktion der selektierten Ramanbanden ist unmittelbar aus dieser Funktion ermittelbar. Die Abklingkonstante wiederum ist unter anderem eine Funktion des thermischen Diffusionskoeffizienten der entsprechenden Partikel, wodurch sich somit eine konkrete Aussage über das Diffusionsverhalten der betreffenden Partikel machen lässt. Der Wert der Korrelationsfunktion bei der Korrelationszeit 0 enthält die mittlere Zahl der Partikel, die sich im Messvolumen befinden. Mit Hilfe der Stokes-Einstein-Relation kann darüber hinaus auch die Größe der selektierten Partikel gemessen werden. Aus der ebenfalls messbaren Kreuzkorrelationsfunktion zweier Ramanbanden, die von zwei Partikelsorten mit unterschiedlicher chemischer Zusammensetzung stammen können, kann ermittelt werden, ob beide Partikelsorten das gleiche Fluktuationsmuster aufweisen, sich also gleichförmig bewegen, d. h. komplexiert vorliegen.

Das erfindungsgemäße Verfahren beruht zunächst auch auf einem homogenen Verdrängungsverfahren, wobei man davon ausgeht, dass ein Referenzwirkstoff aus einem vorgelegten Komplex aus Substrat und Referenzwirkstoff durch einen Wirkstoff aus einer Substanzbank oder aus mittels kombinatorischer Chemie hergestellten Substanzen verdrängt wird, wenn dieser gegenüber dem Referenzwirkstoff effektiver ist, d. h. eine größere Bindungskonstante zum Substrat aufweist. Auf die stattgefundene Verdrängung des Referenzwirkstoffs durch den effektiveren Wirkstoff lässt sich durch Beobachtung des Translationsverhaltens des Referenzwirkstoffs rückschließen. Das Translationsverhalten des Referenzwirkstoffs wiederum bestimmt das durch die Ramankorrelationsspektroskopie ermittelbare Fluktuationsverhalten des entsprechenden Ramansignals von für den Referenzwirkstoff charakteristischen Banden innerhalb eines Messvolumens einer Probe. Über die Autokorrelationsfunktion kann die mittlere Anzahl und die Diffusionskonstante der Partikel des betreffenden Referenzwirkstoffs bestimmt werden, und letztlich kann wiederum eine definitive Aussage darüber gemacht werden, ob ein Übergang des Referenzwirkstoffs vom an das Substrat gebundenen Zustand in den frei diffundierenden Zustand stattgefunden hat, ob also der der Probe zugesetzte zu untersuchende Wirkstoff effektiver ist als der Referenzwirkstoff oder nicht.

Über die so genannten SERS (surface enhanced raman scattering)- und SERRS (surface enhanced resonance raman scattering)-Effekte wird die Nachweisempfindlichkeit des Verfahrens erheblich vergrößert. Bei dem SERS-Effekt werden hohe Streuquerschnitte über lokale Feldüberhöhungen bzw. Chemisorption der betreffenden Substanz an einem metallischen Nanoteilchen erreicht. Erfindungsgemäß wird also das nachzuweisende Molekül, im vorliegenden Fall die Partikel des Referenzwirkstoffs, unmittelbar an die Oberfläche eines metallischen Nanoteilchens gebracht. In einer bevorzugten Ausführungsform handelt es sich bei dem metallischen Nanoteilchen um Ag- oder Au-Teilchen. In einer weiter bevorzugten Ausführungsform wird darüber hinaus die eingestrahlte Lichtwellenlänge, vorzugsweise Laserlicht, in der Nähe der elektronischen Absorption der nachzuweisenden Substanz, d. h. des Referenzwirkstoffs, gewählt, so dass über den so auftretenden Resonanzramaneffekt der Ramanstreuquerschnitt zusätzlich gesteigert wird (SERRS-Effekt).

Der Referenzwirkstoff wird erfindungsgemäß mit einem einen hohen Ramanstreuquerschnitt und ein charakteristisches Ramanspektrum aufweisenden Rest modifiziert. Dabei wird der Referenzwirkstoff vorzugsweise über einen so genannten "Spacer", beispielsweise eine Alkylkette, an ein aromatisches Molekül, insbesondere ein polyaromatisches Molekül mit mehreren konjugierten aromatischen Kernen, wie beispielsweise an Fluoreszenzfarbstoffe aus beispielsweise einer der Klassen der Acridine (z. B. Acridinorange), der Xanthene (z. B. Flourescein, Rhodamin, Behgalrosa, Eosin, Erythrosin), der Thioxanthene oder der Pyrene, oder an andere Fluorochrome wie beispielsweise Tetracyclin oder Porphyrin, die vorzugsweise jeweils mit intrinsischen Bereichen, die eine starke Affinität zu Metalloberflächen besitzen, ausgestattet sind oder damit substituiert werden, gekoppelt. Bei diesen intrinsischen Bereichen kann es sich um N-und/oder S-haltige Reste handeln. Der aromatische Molekülteil besitzt einen hohen Ramanquerschnitt und ein charakteristisches, stark strukturiertes Ramanspektrum. Koppelt man nun diesen modifizierten Referenzwirkstoff mit einem metallischen Nanoteilchen, wobei darauf zu achten ist, das der Referenzwirkstoff nicht seine Bioaktivität verliert, und wählt man die Laserwellenlängen so, dass Resonanzbedingungen vorliegen, so kann der Referenzwirkstoff sehr selektiv anhand der Banden des aromatischen Restes und wegen den oben erläuterten mehrfachen Verstärkungsmechanismen sehr empfindlich nachgewiesen werden. Etwaige Fluoreszenzprobleme treten nicht auf, da metallische Oberflächen Fluoreszenzemissionen sehr effektiv unterdrücken. Der eigentliche Meßeffekt, nämlich die Verdrängung des Referenzwirkstoffs aus seiner Bindung zum Substrat durch einen effektiveren Wirkstoff, wird, wie bereits erläutert, durch das Fluktuationsexperiment über die Bestimmung der Translationsdiffusion selektiv und empfindlich nachgewiesen. Ist der zu untersuchende Wirkstoff effektiver als der Referenzwirkstoff, so geht der Referenzwirkstoff, der immer noch an dem metallischen Nanoteilchen hängt, vom gebundenen Zustand in den freien Zustand über. Dies bewirkt als direkten Meßeffekt eine Erhöhung der Translationsdiffusionskonstante des Referenzwirkstoffs durch die Verringerung seiner Größe bzw. Masse.

Vorzugsweise werden die metallischen Nanoteilchen mit mehreren unterschiedlichen Referenzwirkstoffen belegt. Die charakteristischen Ramanbanden erlauben eine spektrale Trennung der einzelnen Wirkstoffsysteme. Auf diese Weise lassen sich innerhalb eines Meßvolumens unterschiedliche Tests gleichzeitig durchführen. Mit Hilfe dieser parallelen Anordnung läßt sich die Suche nach Wirkstoffen schneller und effektiver durchführen. Die verschiedenen Kanäle, in welchen die jeweiligen Ramanbanden der einzelnen Referenzwirkstoffe aufgenommen werden, können gleichzeitig detektiert werden. Aussagen über stattgefundene Verdrängungsereignisse werden über die charakteristische Verkürzung der Korrelationszeitkonstante getroffen.

In einer bevorzugten Ausführungsform der Erfindung wird der mindestens eine Referenzwirkstoff mit mehreren verschiedenen, jeweils einen hohen Ramanquerschnitt und ein charakteristisches Ramanspektrum aufweisenden Teilchen modifiziert, wobei die Ramanspektren der verschiedenen Teilchen unterscheidbar voneinander sind. Dadurch kann die Sicherheit der Identifikation von Verdrängungsereignissen gesteigert werden. Die Verdrängung des Referenzwirkstoffs muß dann durch eine Verkürzung der

Korrelationszeitkonstante in mehreren Detektionskanälen über den Vergleich der entsprechenden Autokorrelationsfunktionen nachgewiesen werden. Effekte, die in nur einem Kanal auftreten, können als Störeffekte ignoriert werden.

Bei Substraten mit zwei oder mehr unterschiedlichen Andockstellen, wie beispielsweise bei Thrombin oder bei multifunktionellen Antikörpern, ist es oft wünschenswert, nach Wirkstoffen zu suchen, die an alle Andockstellen binden und somit effektivere Wirkstoffe darstellen. Dabei müssen alle Detektionskanäle für die verschiedenen Andockstellen eine Verkürzung der Korrelationszeitkonstante aufweisen, denn nur dann ist sichergestellt, dass der an den verschiedenen Andockstellen jeweils zunächst gebundene Referenzwirkstoff wirklich durch ein und denselben Wirkstoff verdrängt wurde.

Ferner beschreibt die Erfindung die Verwendung einer Vorrichtung zur Durchführung des erfindungsgemäßen Verfahrens, wobei die Vorrichtung mindestens die folgenden Elemente aufweist:
a. eine Lichtquelle mit variabler Belichtungswellenlänge;
b. eine Fokussierungseinrichtung zum Einstellen eines definierten zu untersuchenden Messvolumens innerhalb einer Probe;
c. mindestens eine Einrichtung zur Detektion von durch den Referenzwirkstoff erzeugtem Raman-Streulicht mit guter Zeitauflösung;
d. eine Einrichtung zur Durchführung einer Fluktuationsanalyse zur Wirkstoffsuche.

Die Vorrichtung weist eine Lichtquelle mit variabler Belichtungswellenlänge, vorzugsweise im UV-Spektralbereich auf. Dazu kann beispielsweise eine Xenonhöchstdrucklampe mit vorgeschaltetem Einstrahlmonochromator verwendet werden. Vorzugsweise wird ein durchstimmbares Lasersystem, wie beispielsweise ein frequenzverdoppelter, optisch parametrischer Oszillator verwendet. Das aus der Lichtquelle austretende Licht wird mittels einer Fokussierungseinrichtung auf die zu untersuchende Probe derart fokussiert, dass dadurch mindestens ein Messvolumen innerhalb der Probe definiert wird. Das so definierte Messvolumen kann im Bereich von weniger als 0,1 µm³ oder darüber, vorzugsweise von 0,1 µm³ bis 5 mm³ liegen. Darüber hinaus weist die Vorrichtung eine Einrichtung zur Detektion von durch den Referenzwirkstoff erzeugtem Streulicht auf. Vorzugsweise arbeitet diese Detektionseinrichtung mit guter Zeitauflösung ≤ 10 µs. Ferner weist die Vorrichtung eine Einrichtung zur Durchführung einer Fluktuationsanalyse zur Wirkstoffsuche auf.

Vorzugsweise werden die zu analysierenden Substanzen bzw. Wirkstoffe vor der Messung zunächst einer Pufferlösung von Substrat oder Substraten und Referenzwirkstoffen zudosiert. Danach erfolgt eine Inkubationsperiode. Im Anschluss daran wird eine Korrelationsmessung des gestreuten Lichts durchgeführt. Zur Detektion des Streulichts aus dem definierten Messvolumen der Probe können prinzipiell alle Lichtdetektionssysteme verwendet werden, die eine Detektion nach spektroskopischen Banden erlauben, wie beispielsweise Photomultiplier, Photodioden, zweidimensionale Detektoren (CCD-Photodioden, etc.) in Verbindung mit Spektrographen, Gittern, Prismen oder Farb- oder Interferenzfiltern. Wie bereits erläutert, werden erfindungsgemäß die Streulichtanteile aufgefangen, die eine Wellenlängenverschiebung gegenüber dem eingestrahlten Licht aufweisen, also auf einer inelastischen Lichtstreuung der Probe, wie beispielsweise Molekülschwingungen, beruhen, nämlich die Ramanbanden. Vorzugsweise detektiert man das Rückwärtsstreulicht aus dem definierten Messvolumen der Probe. Man kann so auch Proben untersuchen, die nicht oder kaum lichtdurchlässig sind, insbesondere optisch dicke Proben wie z. B. Polymerproben.

In einer bevorzugten Ausführungsform der Vorrichtung wird als Fokussierungseinrichtung ein konfokales Ramanmikroskop verwendet. Die Probe wird hierbei über das Mikroskopobjektiv vorzugsweise mit Laserlicht beleuchtet, wodurch ein definiertes Messvolumen innerhalb der Probe definiert wird. Das in Rückwärtsrichtung gestreute Ramanlicht wird zunächst mittels eines Filters, vorzugsweise eines holografischen Notchfilters, von dem Laserlicht spektral getrennt. Über die konfokale Blende des Mikroskops im Nachweisstrahlengang wird die Tiefenebene innerhalb der Probe selektiert und somit ein Messvolumen dreidimensional vorzugsweise auf wenige µm³ eingegrenzt. Es kann eine Genauigkeit von ca. 1 bis 3 µm bezüglich des eingestellten Fokus, d. h. des gewünschten Tiefensegments erreicht werden. Im Allgemeinen wird dann mittels eines einfachen Gitterspektrographen die spektrale Zerlegung des Ramanlichts vorgenommen. Eine optische Abbildung sorgt dafür, dass die ausgewählten Ramanbanden in einem oder mehreren hochempfindlichen Photodetektoren mit hoher zeitlicher Auflösung nachgewiesen werden. Anschließend wird das elektrische Signal der Detektoren in einen Korrelator, vorzugsweise einen Frequenzanalysator oder eine AD-Wandlung mit anschließender entsprechender Software-Signalverarbeitung, eingespeist, welcher letztlich die Auto- und/oder die Koinzidenzanalyse ermittelt. Die Autokorrelationskurve nach erfolgter Zugabe der zu analysierenden Wirkstoffe wird rechnerisch mit der Autokorrelationskurve ohne Zugabe der zu analysierenden Wirkstoffe verglichen. Eine Verkürzung nach erfolgter Zugabe bedeutet eine Verdrängung und weist somit einen neuen Wirkstoff nach.

In einer weiteren bevorzugten Ausführungsform der Vorrichtung wird als Fokussierungseinrichtung ein faseroptischer Aufbau verwendet. Dies vereinfacht den experimentellen Aufbau erheblich, was mit einer erheblichen Kosteneinsparung verbunden ist.

Um einen möglichst hohen Durchsatz zu erreichen, können in einer weiteren bevorzugten Ausführungsform der Erfindung sukzessiv hintereinander eine ganze Reihe von unterschiedlichen Proben abgerastert bzw. analysiert werden. Dazu werden beispielsweise Mikrotiterplatten verwendet, die beispielsweise 96, 384, 1536 oder mehr Töpfchen aufweisen, in welche jeweils eine Probe eingebracht werden kann. In einer bevorzugten Ausführungsform der erfindungsgemäßen Verwendung der Vorrichtung weist die Vorrichtung nun einen steuerbaren Translationstisch auf, auf dem mindestens eine Probe, vorzugsweise eine oben erwähnte Mikrotiterplatte befestigt werden kann. Nach erfolgter Analyse einer Probe gemäß dem erfindungsgemäßen Verfahren wird die Mikrotiterplatte mit den verschiedenen Proben mittels des steuerbaren, vorzugsweise rechnersteuerbaren Translationstisch so weiterbewegt, dass ein neues Töpfchen mit einer anderen Probe analysiert werden kann. Die erhaltenen Korrelationskurven werden dann vorzugsweise gemeinsam mit geeigneten Auswerteprogrammen analysiert. Anschließend werden Töpfchen mit Proben, bei denen ein neuer Wirkstoff gefunden wurde, registriert.

Ferner beschreibt die Erfindung die Verwendung des erfindungsgemäßen Verfahrens zur Wirkstoffsuche. Weitere Vorteile, Merkmale und Anwendungsmöglichkeiten der vorliegenden Erfindung ergeben sich aus der nachfolgenden Beschreibung von mehreren Ausführungsformen der Vorrichtung in Verbindung mit den Figuren. Es zeigt:
- Fig. 1: Schematischer Aufbau einer Ausführungsform der Vorrichtung mit einem konfokalen Ramanmikroskop und einem Autokorrelator;
- Fig. 2: Schematischer Aufbau einer anderen Ausführungsform der Vorrichtung mit einem konfokalen Ramanmikroskop und einem Kreuzkorrelator;
- Fig. 3: Schematischer Aufbau einer weiteren Ausführungsform der Vorrichtung mit einem faseroptischen Aufbau.

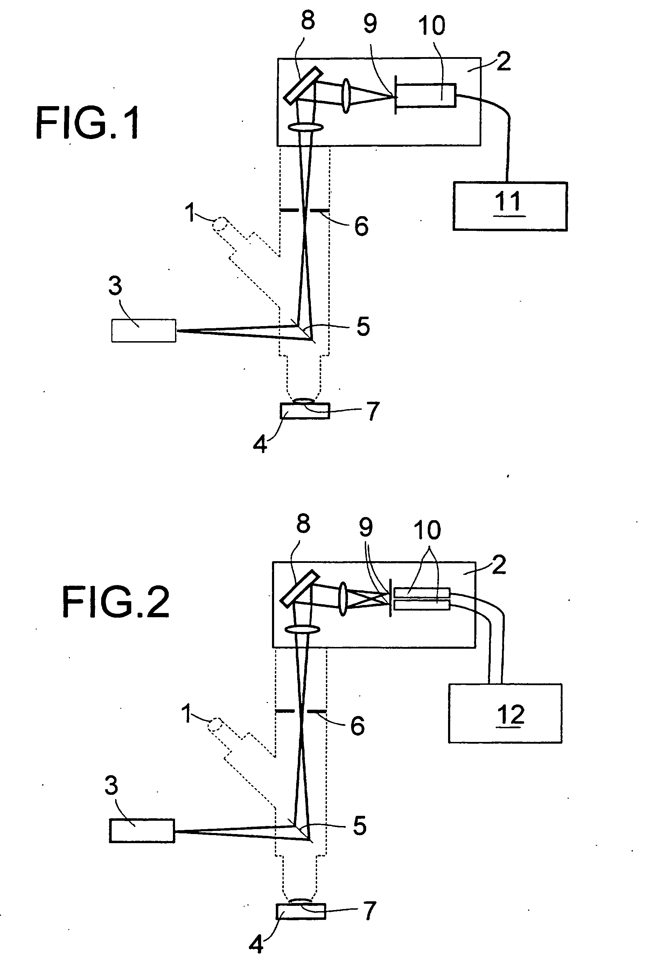

In Figur 1 ist schematisch der Aufbau der Vorrichtung gezeigt. Hierbei ist ein konfokales Mikroskop 1 mit einem Ramanspektrometer 2 derart verknüpft, dass ein Laser 3 über die Abbildungsoptik des Mikroskops 1 auf ein sehr kleines Volumen innerhalb der Probe 4 fokussiert wird. Das entstandene Ramanlicht wird im Nachweisstrahlengang zuerst von dem Laserlicht mittels eines Notchfilters, 5, vorzugsweise eines hocheffizienten holografischen Notchfilters, spektral getrennt. Über die konfokale Blende 6 im Nachweisstrahlengang wird die Tiefenebene selektiert und somit das Messvolumen 7 dreidimensional auf wenige µm³, vorzugsweise auf etwa 1 µm³ eingegrenzt. Ein lichtstarker Gitterspektrograph 8 übernimmt die spektrale Zerlegung des Ramanlichts. Eine optische Abbildung 9 sorgt dafür, dass die ausgewählte Ramanband(en) in einem hochempfindlichen Photodetektor 10, wie z. B. einer Silicium-Avalanche-Photodiode mit hoher zeitlicher Auflösung nachgewiesen werden. Anschließend wird das elektrische Signal des Detektors in einen Korrelator 11 mit anschließender entsprechender Software-Signalverarbeitung eingespeist, welcher die Autokorrelationsfunktion ermittelt. Die Abklingkonstante der Korrelationsfunktion der selektierten Ramanbanden enthält, wie bereits erwähnt, Informationen zum Diffusionsverhalten, und der Wert der Korrelationsfunktion bei der Korrelationszeit 0 enthält die mittlere Zahl der Partikel, die sich im konfokalen Messvolumen befinden. Aus einem rechnerisch durchführbaren Vergleich der Autokorrelationskurve nach und vor erfolgter Zugabe der zu analysierenden Wirkstoffe lässt sich bestimmen, ob ein Verdrängungsereignis stattgefunden hat oder nicht. Eine Verkürzung nach erfolgter Zugabe der zu analysierenden Wirkstoffe bedeutet eine Verdrängung und weist somit einen neuen Wirkstoff nach.

Figur 2 zeigt eine andere bevorzugte Ausführungsform der Vorrichtung. Im Unterschied zu Figur 1 sind in dieser Ausführungsform mehrere Photodetektoren 10 vorgesehen. Somit lassen sich mehrere ausgewählte Ramanbanden gleichzeitig detektieren. Ist nun ein metallisches Nanoteilchen mit mehreren verschiedenen Referenzwirkstoffen, die voneinander unterscheidbare charakteristische Ramanbanden besitzen, belegt, so lässt sich dies mit Hilfe der Kreuzkorrelation bzw. mit Hilfe eines Kreuzkorrelators 12 ermitteln. Durch die Kreuzkorrelation kann man ermitteln, ob zu verschiedenen Ramanlinien gehörende Substanzen korreliert fluktuieren und sich also gleichzeitig auf einem Partikel befinden. Auch hier werden Verdrängungsereignisse durch eine charakteristische Verkürzung der Korrelationszeitkonstante identifiziert. Auf diese Weise lassen sich unterschiedliche Tests in einem Test unterbringen. Diese parallele Anordnung bewirkt ein effektiveres Suchen nach Wirkstoffen. Mit dieser Anordnung lässt sich aber auch die Sicherheit der Identifikation von Verdrängungsereignissen bei ein und demselben Referenzwirkstoff steigern, nämlich dadurch, dass der Referenzwirkstoff mit mehreren unterschiedlichen, einen hohen Ramanquerschnitt und ein charakteristisches Ramanspektrum aufweisenden Resten modifiziert wird. Die Verdrängung des Referenzwirkstoffs muss dann durch eine Verkleinerung der Korrelationskonstanten in den verschiedenen Photodetektoren 10 über den Vergleich der entsprechenden Autokorrelationsfunktionen nachgewiesen werden.

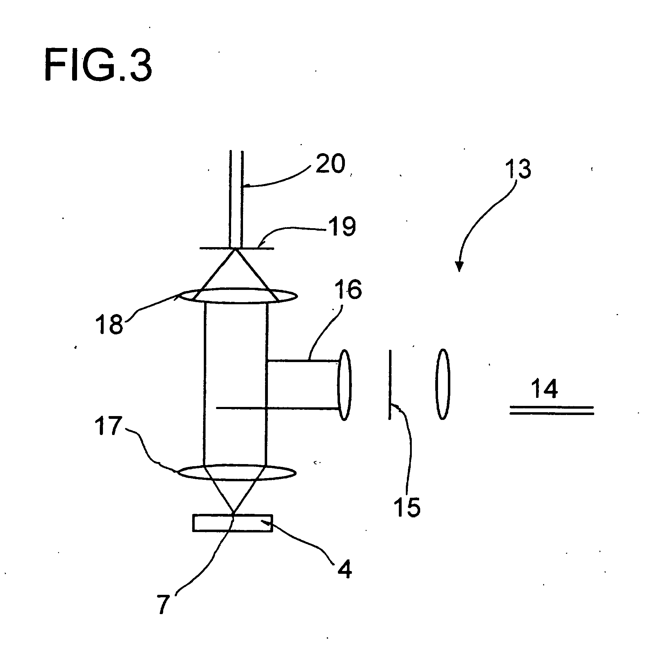

Figur 3 zeigt einen Teil einer weiteren Ausführungsform der Vorrichtung, wobei hier das konfokale Mikroskop von Figur 1 und 2 durch einen analogen faseroptischen Aufbau 13 ersetzt ist. Dazu wird die Laserstrahlung in eine Monomodefaser 14 eingekoppelt. Vorzugsweise wird zusätzlich ein Raumfilter 15 eingebaut, um so die Modenqualität zu verbessern. Danach wird die Laserstrahlung über ein Notchfilter 16 und eine Fokussierungsoptik 17, vorzugsweise ein Mikroskopobjektiv, in die Probe 4 geleitet. Die Ramanstreuung aus dem Messvolumen 7 wird in Rückwärtsstreuung von der Fokussierungsoptik 17 gesammelt und passiert das Notchfilter 16, wobei der größte Teil der Laserwellenlänge unterdrückt wird. Die konfokale Abbildung wird durch eine Linse 18 erreicht, die auf eine einstellbare konfokale Blende 19 fokussiert. Danach erfolgt unmittelbar die Einkopplung in die Detektionsfaser 20, die in das Spektrometer führt. Dort wird das Ramanlicht spektral zerlegt und mit Umlenkoptiken oder weiteren Lichtleitfasern auf die einzelnen Detektoren geleitet.

## Patentansprüche

1. Verfahren zur Suche eines effektiven Wirkstoffs durch Verdrängen eines Referenzwirkstoffs aus einem vorgelegten Komplex aus Substrat und Referenzwirkstoff durch einen effektiveren Wirkstoff aus einer Substanzbank, der eine größere Bindungskonstante zum Substrat aufweist, und durch Registrierung des Translationsdiffusionsverhaltens des Referenzwirkstoffs, **dadurch gekennzeichnet, dass** die Registrierung des Translationsverhaltens mittels der Ramankorrelationsspektroskopie erfolgt, wobei der mindestens eine Referenzwirkstoff mit einem einen hohen Ramanstreuquerschnitt und ein charakteristisches Ramanspektrum aufweisenden aromatischen Molekül modifiziert wird, und dieser modifizierte Referenzwirkstoff mit einem metallischen Nanoteilchen gekoppelt wird, wobei dieser nicht seine Bioaktivität verliert.

2. Verfahren nach Anspruch 1, **dadurch gekennzeichnet, dass** der mindestens eine Referenzwirkstoff mit mehreren verschiedenen, jeweils einen hohen Ramanquerschnitt und ein charakteristisches Ramanspektrum aufweisenden Resten modifiziert wird, wobei die Ramanspektren der verschiedenen Reste unterscheidbar voneinander sind.

3. Verwendung einer Vorrichtung zur Durchführung des Verfahrens nach Anspruch 1 oder 2, wobei die Vorrichtung mindestens die folgenden Elemente aufweist:
a. eine Lichtquelle mit variabler Belichtungswellenlänge;
b. eine Fokussierungseinrichtung zum Einstellen eines definierten zu untersuchenden Meßvolumens innerhalb einer Probe;
c. mindestens eine Einrichtung zur Detektion von durch den Referenzwirkstoff erzeugtem Raman-Streulicht mit guter Zeitauflösung;
d. eine Einrichtung zur Durchführung einer Fluktuationsanalyse zur Wirkstoffsuche.

4. Verwendung einer Vorrichtung nach Anspruch 3, **dadurch gekennzeichnet, dass** die Vorrichtung einen steuerbaren Translationstisch zur Befestigung mindestens einer Probe aufweist.

5. Verwendung des Verfahrens nach Anspruch 1 oder 2 zur Wirkstoffsuche.

## Claims

1. A method of searching for an effective active compound by displacement of a reference active compound from an existing complex of substrate and reference active compound by a more effective active compound from a substance library which has a greater binding constant to the substrate and by recording the translation diffusion behavior of the reference active compound, wherein the recording of the translation behavior takes place by means of Raman correlation spectroscopy, wherein the at least one reference active compound is modified by an aromatic molecule having a high Raman scattering cross section and a characteristic Raman spectrum, and this modified reference active compound is coupled to a metallic nanoparticle which does not lose its bioactivity.

2. The method according to claim 1, wherein the at least one reference active compound is modified by a plurality of different radicals, each having a high Raman cross section and a characteristic Raman spectrum, wherein the Raman spectra of the various radicals can be differentiated from one another.

3. The use of an apparatus for carrying out the method according to claim 1 or 2, wherein the apparatus has at least the following elements:
a. a light source with variable illumination wavelength;
b. a focusing device for setting a defined measurement volume to be investigated within a sample;
c. at least one device for the detection of Raman scattered light produced by the reference active compound with good time resolution;
d. a device for carrying out a fluctuation analysis for active compound searching.

4. The use of an apparatus according to claim 3, wherein the apparatus has a controllable translation stage for mounting of at least one sample.

5. The use of the method according to claim 1 or 2 for active compound searching.

## Revendications

1. Procédé de recherche d'une substance active effective en substituant une substance active de référence d'un complexe existant constitué d'un substrat et d'une substance active de référence par une substance active plus efficace provenant d'une banque de substances qui présente une constante de liaison au substrat plus élevée et en enregistrant le comportement de diffusion translatoire de la substance active de référence, **caractérisé en ce que** l'enregistrement du comportement translatoire s'effectue au moyen d'une spectroscopie à corrélation Raman, l'au moins une substance active de référence étant modifiée par une molécule aromatique présentant une section transversale de diffusion Raman élevée et un spectre Raman caractéristique et cette substances active de référence modifiée étant couplée avec une nanoparticule métallique, celle-ci ne perdant pas sa bioactivité.

2. Procédé selon la revendication 1, **caractérisé en ce que** l'au moins une substance active de référence est modifiée avec plusieurs radicaux différents présentant respectivement une section transversale Raman élevée et un spectre Raman caractéristique, les spectres Raman des différents radicaux pouvant être distingués les uns des autres.

3. Utilisation d'un dispositif destiné à mettre en oeuvre le procédé selon la revendication 1 ou 2, le dispositif présentant au moins les éléments suivants :
a. une source de lumière avec une longueur d'onde d'éclairage variable ;
b. un dispositif de concentration pour régler un volume de mesure à analyser donné à l'intérieur d'un échantillon ;
c. au moins un dispositif pour détecter avec une bonne résolution dans le temps la lumière diffusée Raman produite par la substance active de référence ;
d. un dispositif pour effectuer une analyse de la fluctuation en vue de rechercher la substance active.

4. Utilisation d'un dispositif selon la revendication 3, **caractérisée en ce que** le dispositif présente une platine de transition commandable pour la fixation d'au moins un échantillon.

5. Utilisation du procédé selon la revendication 1 ou 2 pour la recherche de la substance active.
